# EUROPÄISCHE PATENTANMELDUNG

(11) **EP 2 886 934 A2**
(43) Veröffentlichungstag der Anmeldung: **24.06.2015**
(21) Anmeldenummer: 14004237.5
(22) Anmeldetag: 16.12.2014
(51) Int. Cl.: F21S 8/02, F21V 5/04, F21V 5/08, F21V 7/04, F21V 13/04, F21V 17/00, F21Y 101/02, G02B 19/00

(54) **Leuchte u.a.**

(30) Priorität: 19.12.2013 DE 102013021309
(71) Anmelder: ERCO GmbH, 58507 Lüdenscheid (DE)
(72) Erfinder: Bremerich, Matthias, D-57368 Lennestadt (DE)
(74) Vertreter: Roche, von Westernhagen & Ehresmann

(57) **Zusammenfassung**

Die Erfindung betrifft unter anderem eine Leuchte (10) zur Anbringung an einer Decke eines Gebäuderaumes und zur Ausleuchtung einer Bodenfläche oder einer Gebäudeteilfläche, umfassend ein Gehäuse (11) mit einer wannenförmige Aufnahme (12), in der als Lichtquelle (13) wenigstens eine LED (14a, 14b, 14c, 14d) angeordnet ist, die Licht auf ein Linsenelement (24, 32) abstrahlt. Die Besonderheit besteht unter anderem darin, dass das Linsenelement (24, 32) eine durchgehend plane Lichteintrittsfläche (27, 33) aufweist.

## Beschreibung

Die Erfindung betrifft zunächst eine Leuchte nach dem Oberbegriff des Anspruches 1.

Derartige Leuchten werden von der Anmelderin seit geraumer Zeit entwickelt und vertrieben.

Beispielhaft sei verwiesen auf eine in der deutschen Patentanmeldung DE 10 2012 006 999 A1 der Anmelderin vorbeschriebenen Leuchte.

Der Erfindung liegt die Aufgabe zugrunde, eine Leuchte bereitzustellen, die als Downlight ausgebildet ist, und die einen einfachen Aufbau, bzw. eine einfache Konstruktion ermöglicht.

Die Erfindung löst diese Aufgabe zunächst mit den Merkmalen des Anspruches 1.

Demnach ist gemäß einer ersten Alternative der Erfindung vorgesehen, dass das Linsenelement eine durchgehend plane Lichteintrittsfläche aufweist.

Als plane Lichteintrittsfläche wird eine entlang einer Ebene ausgerichtete, durchgehend glatte, das heißt eben ausgebildete, Lichteintrittsfläche verstanden. Diese ist frei von Sprüngen, Unstetigkeitsstellen, Wölbungen und dergleichen.

Alternativ ist gemäß der Erfindung vorgesehen, dass die Lichteintrittsfläche des Linsenelementes nur sehr geringfügig gewölbt ausgebildet ist.

Die Lichteintrittsfläche kann bei dieser Alternative der Erfindung nach außen oder nach innen gewölbt sein. Die Lichteintrittsfläche kann also konvex oder konkav gewölbt ausgebildet sind.

Als schwach gewölbt oder geringfügig gewölbte Lichteintrittsfläche wird im Sinne der vorliegenden Patentanmeldung jede durchgehend - stetig schwach - gekrümmte Raumfläche verstanden, die keinen Wendepunkt aufweist, und die eine Scheitelhöhe aufweist, die weniger als 10 %, vorzugsweise weniger als 5 %, des Krümmungsdurchmessers beträgt.

Im Falle einer geringfügig gewölbten Lichteintrittsfläche ist diese sphärisch oder im wesentlichen sphärisch oder angenähert sphärisch gekrümmt. Dieser Sphäre ist ein Radius und somit auch ein Durchmesser zuordenbar. Die Scheitelhöhe entspricht der größten Höhendifferenz der Lichteintrittsfläche entlang des Linsenelementes.

Vorzugsweise weist die erfindungsgemäße Leuchte aber eine durchgehend plane, das heißt eben ausgebildete Lichteintrittsfläche auf.

Lichteintrittsflächen, die eben ausgebildet sind, und die nur sehr geringfügige Abweichungen von einer geometrischen Ebene aufweisen, werden im Sinne der vorliegenden Patentanmeldung ebenfalls als durchgehend plane Lichteintrittsfläche bezeichnet.

Die Erfindung stellt eine Leuchte bereit mit einem Gehäuse, das z. B. aus Metall bestehen kann. Das Gehäuse kann beispielsweise auch mit Kühlrippen versehen sein. Das Gehäuse weist eine wannenförmige Aufnahme auf, in der als Lichtquelle wenigstens eine LED angeordnet ist. Vorzugsweise ist in der Aufnahme eine Vielzahl von LED's angeordnet, um die gewünschten hohen Lichtströme generieren zu können.

Als LED im Sinne der vorliegenden Patentanmeldung wird jede geeignete lichtemittierende Diode bezeichnet. In Frage kommen dabei zum Beispiel neben Hochleistungs-LED's von Lumiled zum Beispiel auch sogenannte Chip-On-Board-LED's die auch unter der Bezeichnung LED-Array kommerziell erhältlich sind, und beispielsweise von der Firma Cree, Inc. unter der Bezeichnung CX-A-LED-Array vertrieben werden.

Freilich kommen zum Einsatz gemäß der Erfindung auch andere LED's in Betracht.

Das von den LED's emittierte Licht wird auf ein Linsenelement abgestrahlt. Das Linsenelement weist eine Lichteintrittsfläche und eine Lichtaustrittsfläche auf.

Die Formulierung, wonach das von den LED's emittierte Licht auf ein Linsenelement abgestrahlt wird, umfasst insbesondere Ausführungsformen, bei denen zwischen der LED und der Lichteintrittsfläche des Linsenelementes keine weiteren optischen Elemente, insbesondere keine im Stand der Technik verwendeten Sekundär- oder Kolimatoroptiken angeordnet werden.

Die LED, sowie ein möglicherweise unmittelbar mit der LED verbundenes Primäroptikelement, zum Beispiel eine optische Vergusslinse aus Harz oder dergleichen, wird als Primäroptik bezeichnet.

Von dieser Primäroptik strahlt das Licht unmittelbar auf die Lichteintrittsfläche des Linsenelementes.

Eine Besonderheit besteht darin, dass die Lichteintrittsfläche plan ausgebildet ist. Die Lichteintrittsfläche kann daher so groß ausgebildet sein, dass sie eine Anordnungsfläche für die LED's, also eine Fläche, entlang derer die LED's angeordnet sind, übersteigt, insbesondere deutlich übersteigt.

Es genügt also ein einziges Linsenelement für die gesamte Leuchte vorzusehen. Dies bringt insbesondere erhebliche Vorteile mit sich, wenn viele LED's überdeckt werden sollen.

Zum einen kann die Zahl der Linsenelemente damit auf ein einziges reduziert werden.

Zum anderen ist dieses einzige Linsenelement besonders leicht skalierbar.

Zwischen der Lichtquelle und dem Linsenelement ist gemäß einer Ausführungsform der Erfindung keine weitere lichtbündelnde Optik angeordnet.

Es besteht erfindungsgemäß die Möglichkeit, ein Diffusorelement, zum Beispiel eine Diffusorfolie, zwischen LED's und Lichteintrittsfläche des Linsenelementes vorzusehen.

Die Lichtaustrittsfläche des Linsenelementes ist gewölbt, insbesondere stetig gewölbt. In Frage kommen beispielsweise rotationssymmetrische, asphärische Wölbungen. Das Linsenelement kann im Querschnitt beispielsweise im Wesentlichen parabelförmig ausgebildet sein.

Als stetig gewölbte Flächen im Sinne der vorliegenden Patentanmeldung werden solche gekrümmten Grenzflächen verstanden, die frei von Sprüngen ausgebildet sind.

Alternativ kommen in Frage auch nicht-rotationssymmetrische Ausbildungen des Linsenelementes. Dieses kann beispielsweise zum Zwecke der Erzielung einer im Wesentlichen ovalen Lichtverteilung entlang einer ersten Schnittebene als Sammellinse zur Erzielung eines ersten Abstrahlwinkels, und entlang einer zweiten Schnittebene als Sammellinse zur Erzielung eines zweiten, von dem ersten Abstrahlungswinkel unterschiedlichen, Abstrahlungswinkel ausgebildet sein.

Das Linsenelement ist als Sammellinse ausgebildet. Es weist zumindest entlang einer Querschnittsebene eine Sammellinsenfunktion auf. Dieser Sammellinse, bzw. Sammellinsenfunktion ist eine Brennweite zugeordnet.

Bei der erfindungsgemäßen Leuchte sind LED's und Linse derartig zueinander positioniert, dass die LED's zwischen dem Brennpunkt und der Lichteintrittsfläche des Linsenelementes angeordnet sind. Es ist insoweit bemerkenswert, dass gemäß einer Ausführungsform der Erfindung die LED's nicht im Brennpunkt des Linsenelementes angeordnet sind.

Das Linsenelement weist auf seiner Lichteintrittsfläche insbesondere keine Höhlung auf, innerhalb der die LED's positioniert werden, bzw. die die LED's übergreifen. Hierdurch kann die Herstellung des Linsenelementes erheblich vereinfacht werden. Auch kann hierdurch eine verbesserte und vereinfachte Lichtweiterleitung des von den LED's emittierten Lichtes durch das Linsenelement erfolgen.

Die Erfindung löst die gestellte Aufgabe des Weiteren durch eine Leuchte nach Anspruch 3.

Demnach ist als Besonderheit - gemäß einer Ausführungsform der Erfindung in Verbindung mit den Merkmalen der zuvor beschriebenen Ansprüche - vorgesehen, dass das Linsenelement eine Lichteintrittsfläche aufweist, deren Außendurchmesser größer ist als 40 mm, insbesondere größer ist als 50 mm, weiter insbesondere größer ist als 60 mm. Für den Fall, dass die Lichteintrittsfläche des Linsenelementes von einem Kreis gebildet ist, findet der Begriff Außendurchmesser unmittelbar Anwendung. Das Linsenelement kann allerdings auch eine Lichteintrittsfläche aufweisen, deren Kontur von einem Kreis abweicht. Dann wird als Außendurchmesser jeweils die größte Breite der Lichteintrittsfläche bezeichnet.

Bei einer vorteilhaften Ausgestaltung der Erfindung kann der Außendurchmesser der Lichteintrittsfläche auch deutlich größer als 60 mm ausgebildet sein, insbesondere größer als 70 mm, weiter insbesondere größer als 80 mm, weiter insbesondere größer als 90 mm.

Bei einem besonders bevorzugten Ausführungsbeispiel der Erfindung beträgt der Außendurchmesser der Lichteintrittsfläche etwa 100 mm.

Durch die derartig groß ausgebildete Lichteintrittsfläche kann eine Vielzahl von LED's, sowie ggf. auch noch ein eine Anordnungsfläche der LED's kreisringförmig umgebender Abschnitt einer Reflektionsfläche auf einfache Weise übergriffen werden.

Die Erfindung löst die gestellte Aufgabe gemäß einem weiteren Aspekt auch durch die Merkmale des Anspruches 5.

Demnach ist als Besonderheit - gemäß einer Ausführungsform der Erfindung in Verbindung mit den Merkmalen der zuvor beschriebenen Ansprüche - vorgesehen, dass das Linsenelement eine ovale Lichtverteilung bereitstellt. Eine ovale Lichtverteilung im Sinne der vorliegenden Patentanmeldung ist eine auf der auszuleuchtenden Gebäudefläche zu generierende Lichtfeldkontur, die in einer Richtung länger gestreckt ausgebildet ist als in einer quer dazu verlaufenden zweiten Richtung.

Die Erfindung ermöglicht insbesondere den Einsatz von Linsenelementen mit einer plan ausgebildeten Lichteintrittsfläche, und einer auf besondere Weise ausgebildeten Lichtaustrittsfläche. Die Lichteintrittsfläche kann dabei vorzugsweise kreisförmig ausgebildet sein.

Die Lichtaustrittsfläche des Linsenelementes kann eine Umfangskontur aufweisen, die über die Umfangskontur der Lichteintrittsfläche zumindest bereichsweise hinausragt. Entlang gewisser Abschnitte ist die Umfangskontur der Lichtaustrittsfläche des Linsenelementes insoweit größer ausgebildet, als die Umfangskontur der Lichteintrittsfläche. Hierdurch kann eine besonders vorteilhafte Lichtweiterleitung erreicht werden. Es besteht bei dieser Ausgestaltung der Erfindung nämlich die Möglichkeit Grenzflächen besonders optimiert anzuordnen.

Die Lichtaustrittsfläche kann darüber hinaus eine Umfangskontur aufweisen, die Einschnürungsbereiche umfasst. Entlang dieser Einschnürungsbereiche ragt die Umfangskontur der Lichteintrittsfläche über die Umfangskontur der Lichtaustrittsfläche hinaus. Anders ausgedrückt ist die Umfangskontur der Lichtaustrittsfläche entlang der Einschnürungsbereiche schmaler ausgebildet, als die Umfangskontur der Lichteintrittsfläche.

Als Umfangskontur der Lichteintrittsfläche oder als Umfangskontur der Lichtaustrittsfläche wird im Sinne der vorliegenden Patentanmeldung eine Hüllkurve der jeweiligen Fläche verstanden, die sich einem Betrachter bei Betrachtung einer Ansicht entlang einer optischen Achse oder optischen Hauptachse des Linsenelementes ergibt. Diese Hüllkontur wird in eine Ebene hinein projiziert, deren Normalvektor von der geometrischen Achse des Linsenelementes gebildet ist.

Die Erfindung löst die gestellte Aufgabe darüber hinaus mit den Merkmalen des Anspruches 8.

Demnach ist als Besonderheit - gemäß einer Ausführungsform der Erfindung in Verbindung mit den Merkmalen der zuvor beschriebenen Ansprüche - vorgesehen, dass das Linsenelement eine Lichteintrittsfläche aufweist, die mit einer Aufrauhung versehen ist.

Alternativ kann der Lichteintrittsfläche des Linsenelementes im Lichtwege ein Diffusorelement, insbesondere eine Diffusorfolie, vorgeschaltet sein.

Die Diffusorfolie kann beispielsweise von einem sehr dünnen, mattiert oder satiniert ausgebildeten Kunststofffolienelement bereitgestellt sein.

Die Diffusorfolie kann insbesondere eine Dimension aufweisen, die der Größe der Lichteintrittsfläche des Linsenelementes entspricht.

Vorteilhafterweise ist die Diffusorfolie als gesondertes Element mittelbar oder unmittelbar an dem Gehäuse befestigbar. Insbesondere kann die Diffusorfolie an das Gehäuse herangesetzt werden und im Zuge der Befestigung des Linsenelementes an dem Gehäuse, welche mittelbar oder unmittelbar erfolgen kann, selbst an dem Gehäuse festgelegt werden.

Die Diffusorfolie bzw. die Aufrauhung führt zu einer gewissen Lichtmischung und Vergleichmäßigung. Außerdem wird bei fertig montierter Leuchte ein unmittelbarer Einblick durch das an sich klar ausgebildete Linsenelement hindurch auf die LED's verhindert. Die Lichtquelle ist nicht unmittelbar klar und transparent sichtbar, sondern nur noch diffus.

Auch wenn die Lichteintrittsfläche des Linsenelementes alternativ aufgeraut ist, wird der gleiche lichttechnische Effekt erreicht. Die Aufrauhung des Linsenelementes kann - je nach Wahl des Materials des Linsenelementes - beispielsweise durch Ätzen, Sandstrahlen, mechanische Bearbeitung des Werkzeuges oder des Werkstücks oder durch ein geeignetes anderes Verfahren erfolgen. Denkbar ist auch, dass eine Diffusorfolie auf die Lichteintrittsseite des Linsenelementes aufgeklebt wird.

Gemäß einer vorteilhaften Ausgestaltung der Erfindung ist vorgesehen, dass eine plan ausgebildete Lichteintrittsfläche des Linsenelementes eine Mehrzahl von LED's übergreift.

Gemäß einer vorteilhaften Ausgestaltung der Erfindung ist vorgesehen, dass das Diffusorelement, insbesondere die Diffusorfolie, eine Mehrzahl von LED's übergreift.

Die Erfindung löst die gestellte Aufgabe gemäß einem weiteren Aspekt auch durch die Merkmale des Anspruches 10. Hierdurch wird eine Leuchte bereitgestellt, bei der das Linsenelement - gemäß einer Ausführungsform der Erfindung in Verbindung mit den Merkmalen der zuvor beschriebenen Ansprüche - eine Lichteintrittsfläche aufweist, die größer, insbesondere erheblich größer, ausgebildet ist, als eine Anordnungsfläche für die wenigstens eine LED, vorzugsweise für mehrere LED's.

Als Anordnungsfläche wird die Fläche bezeichnet, entlang der die LED oder entlang der die LED's angeordnet sind. Es kann sich dabei beispielsweise um die Montagefläche auf einer Platine handeln, auf der die LED's befestigt sind.

Die Anordnungsfläche ist also der sich insbesondere entlang einer Ebene erstreckende, für die Anordnung und Unterbringung der LED's erforderliche Bauraum.

Insbesondere für den Fall, dass für die Lichtquellen der erfindungsgemäßen Leuchte eine Vielzahl von LED's vorgesehen sind, ist die Anordnungsfläche mindestens so groß, wie eine Hüllkontur um sämtliche LED's herum.

Gemäß der Erfindung ist die Anordnungsfläche für die wenigstens eine LED von einer Reflektionsfläche umgeben. Die Reflektionsfläche ist ringförmig, insbesondere kreisringförmig ausgebildet.

Die Reflektionsfläche ist dafür vorgesehen, Lichtanteile, die von der Lichteintrittsfläche des Linsenelementes reflektiert werden, auf das Linsenelement zurückzuwerfen.

Die von den LED's emittierten Lichtanteile gelangen insbesondere unmittelbar auf die Lichteintrittsfläche des Linsenelementes und werden überwiegend durch das Linsenelement hindurch zur Lichtaustrittsfläche des Linsenelementes geleitet, und verlassen von dort die Leuchte.

Ein geringer Anteil an Lichtanteilen, die von LED's emittiert werden, werden allerdings an der Lichteintrittsfläche des Linsenelementes reflektiert. Je nach Gestaltung der Oberfläche des Linsenelementes und je nach Wahl des Materials des Linsenelementes kann beispielsweise ein Anteil von etwa 10% des Lichtstromes reflektiert werden.

Um die Effizienz der Leuchte zu erhöhen ist gemäß der Erfindung eine Reflektionsfläche vorgesehen. Diese dient dazu, die von dem Linsenelement reflektierten Lichtanteile nochmalig dem Linsenelement zuzuführen.

Die Effizienz der Leuchte kann hierdurch um einige Prozentpunkte erhöht werden.

Die Reflektionsfläche kann gemäß einer vorteilhaften Ausgestaltung der Erfindung von einem hoch reflektiven oder diffus abstrahlend reflektierenden Element bereitgestellt werden. Beispielsweise kann dieses aus Kunststoff, insbesondere aus einem weißen Kunststoff, bestehen, oder von einer andersfarbigen, zum Beispiel mattierten, Fläche bereitgestellt sein. Das Element kann vorteilhafterweise aus Kunststoff bestehen. Es besteht auch die Möglichkeit, das Element hochglänzend oder hochspiegelnd auszubilden.

Die Erfindung löst die gestellte Aufgabe gemäß einem weiteren Aspekt auch mit den Merkmalen des Anspruches 11.

Hier ist als Besonderheit - gemäß einer Ausführungsform der Erfindung in Verbindung mit den Merkmalen der zuvor beschriebenen Ansprüche - vorgesehen, dass ein im Wesentlichen ringförmiges Abdeckelement an dem Gehäuse festgelegt ist. Es handelt sich dabei um ein von dem zuvor beschriebenen, eine Reflektionsfläche bereitstellenden, Element unterschiedliches Element.

Das ringförmige Abdeckelement weist eine zentrale Öffnung auf. Die Öffnung kann im Wesentlichen der Größe der Lichteintrittsfläche des Linsenelementes entsprechen.

Gemäß der Erfindung kann eine besonders einfache Konstruktion erreicht werden. Es besteht nämlich die Möglichkeit, das Linsenelement an dem Abdeckelement zu befestigen, und das Abdeckelement - mit dem daran befestigten Linsenelement - an dem Gehäuse zu befestigen.

Alternativ ist von der Befestigungsreihenfolge her auch eine Ausgestaltung der Erfindung denkbar, wonach erst das ringförmige Abdeckelement an dem Gehäuse befestigt wird, und sodann das Linsenelement an dem Abdeckelement befestigt wird.

Gemäß einer vorteilhaften Ausgestaltung der Erfindung wird die Reflektionsfläche von einem Element bereitgestellt, welches gesondert von dem Abdeckelement gefertigt ist.

Gemäß einer alternativen Ausgestaltung der Erfindung sind die Reflektionsflächen und das Abdeckelement von einem gemeinsamen Element bereitgestellt.

Gemäß einer vorteilhaften Ausgestaltung der Erfindung weist das Linsenelement eine Lichtaustrittsfläche auf, deren Umfangskontur die Größe der Öffnung des Abdeckelementes zumindest abschnittsweise übersteigt. Hierdurch kann eine besonders vorteilhafte Lichtweiterleitung durch das Linsenelement erreicht werden.

Insbesondere kann vorgesehen sein, dass sich das Linsenelement mit Abschnitten seiner Lichtaustrittsfläche in einem Innenraum, der von dem Abdeckelement bereitgestellt ist, derartig ausbreitet, dass das Linsenelement mit Wandungsbereichen an Abschnitte der Innenseite des Abdeckelementes heranragt oder daran anliegt. Hierdurch kann eine weiter vorteilhafte Lichtlenkung durch das Linsenelement erreicht werden.

Das Abdeckelement kann vorteilhafterweise Festlegungsmittel zur Befestigung an dem Gehäuse aufweisen. Es kann sich dabei beispielsweise um Schnapphaken, Befestigungslaschen, Schraub- oder Bajonett-Befestigungsmittel oder dergleichen handeln.

Das Linsenelement kann ebenfalls Befestigungsmittel zur Festlegung an dem Abdeckelement aufweisen. Weiter können Gegenbefestigungsmittel an dem Abdeckelement vorgesehen sein.

Gemäß einer vorteilhaften Ausgestaltung der Erfindung ist vorgesehen, dass das Abdeckelement Festlegungsmittel zur Befestigung an dem Gehäuse aufweist.

Das Abdeckelement besteht vorzugsweise aus Kunststoff. Die Gegenbefestigungsmittel zur Festlegung des Linsenelementes im Zusammenwirken mit den Befestigungsmitteln am Linsenelement können beispielsweise als elastische Federlaschen ausgebildet sein.

Das Gehäuse kann vorzugsweise aus Metall bestehen.

Das Linsenelement, welches nachfolgend auch Kollimatoroptik genannt wird, kann beispielsweise aus Kunststoff, Silikon oder aus Glas bestehen.

Die Erfindung bezieht sich darüber hinaus auch auf eine Kollimatoroptik nach Anspruch 12.

Aufgabe dieser Erfindung ist es, eine Kollimatoroptik bereitzustellen, die zum Einsatz in einer zuvor beschriebenen Leuchte geeignet ist.

Die Erfindung löst die Aufgabe zunächst mit den Merkmalen des Anspruches 12.

Gemäß der Erfindung wird eine Kollimatoroptik mit einer rotationssymmetrischen Lichtverteilung bereitgestellt.

Die Anordnung einer gewölbten Lichtaustrittsfläche und einer planen Lichteintrittsfläche ermöglicht eine Skalierung im Prinzip beliebiger Größe.

Im übrigen wird zur Erläuterung dieser Erfindung und zur Beschreibung der einzelnen Merkmale und zur Erläuterung deren Bedeutung auf die vorherigen Passagen verwiesen.

Gemäß Anspruch 13 wird die Aufgabe auch durch eine alternative Kollimatoroptik gelöst. Diese Kollimatoroptik weist eine nicht-rotationssymmetrische Lichtverteilung auf. Durch die besondere Umfangskontur, und den Umstand, dass diese über die Kreiskontur der Lichteintrittsfläche abschnittsweise hinausragt, wird eine besonders vorteilhafte Geometrie ermöglicht, die eine optimierte Lichtweiterleitung zulässt.

Gemäß einer vorteilhaften Ausgestaltung der Erfindung ist vorgesehen, dass die Umfangskontur der Lichtaustrittsfläche zumindest abschnittsweise gegenüber der Kreiskontur der Lichteintrittsfläche zurückspringt.

Die Erfindung löst die Aufgabe des Weiteren mit den Merkmalen des Anspruches 14.

Hierdurch wird eine Kollimatoroptik bereitgestellt, die eine im Wesentlichen ovale Lichtverteilung zulässt.

Gemäß einer vorteilhaften Ausgestaltung der Erfindung ist vorgesehen, dass der Querschnitt entlang der ersten Mittellängsebene eine erste Sammellinse zur Erzielung eines ersten Abstrahlwinkels und der Querschnitt entlang der zweiten Mittellängsebene eine zweite Sammellinse zur Erzielung eines zweiten, von dem ersten Abstrahlwinkel unterschiedlichen, Abstrahlwinkels bereitstellt.

Die Erfindung bezieht sich darüber hinaus auf ein Modulsystem für Leuchten nach Anspruch 15.

Aufgabe der Erfindung ist es, ein Modulsystem für die zuvor beschriebenen Leuchten bereitzustellen, welches unter Verwendung von Gleichteilen eine einfache Konstruktion und Fertigung unterschiedlicher Leuchten mit unterschiedlichen Lichtverteilungen ermöglicht.

Die Erfindung löst diese Aufgabe mit den Merkmalen des Anspruches 15.

Die Besonderheit besteht darin, dass unterschiedliche Linsenelemente gleich ausgebildete und gleich dimensionierte Lichteintrittsflächen und gleiche mechanische Schnittstellen aufweisen. Es kann insoweit eine Befestigung an den selben, bzw. gleichen Elementen der Leuchte, z. B. an dem Abdeckelement oder unmittelbar an dem wannenförmigen Gehäuse, erfolgen. Lediglich durch Änderung der Lichtaustrittsfläche wird eine geänderte Lichtverteilung bereitgestellt.

Weitere Vorteile der Erfindung ergeben sich anhand der nicht zitierten Unteransprüche, sowie anhand der nachfolgenden Beschreibung der in den Figuren dargestellten Ausführungsbeispiele. Darin zeigen:
- Fig. 1: in einer perspektivischen Ansicht in Alleindarstellung ein erstes Ausführungsbeispiel einer erfindungsgemäßen Leuchte,
- Fig. 2: das Linsenelement der Leuchte der Fig. 1 in perspektivischer Ansicht in Einzeldarstellung,
- Fig. 3: in einer teilgeschnittenen schematischen Ansicht das Linsenelement der Fig. 2 in Draufsicht, etwa entlang Ansichtspfeil III in Fig. 2,
- Fig. 4: in einer teilgeschnittenen schematischen Ansicht einen Schnitt durch ein Ausführungsbeispiel einer erfindungsgemäßen Leuchte, etwa gemäß Fig. 1 entlang einem Längsschnitt des Linsenelementes etwa entlang Schnittlinie IV-IV in Fig. 3,
- Fig. 5: schematisch einen Schnitt durch die Leuchte der Fig. 1 entlang einem Querschnitt durch das Linsenelement, etwa entlang Schnittlinie V-V in Fig. 3,
- Fig. 6: ein weiteres Ausführungsbeispiel einer erfindungsgemäßen Leuchte in einer Darstellung gemäß Fig. 1 mit einem gegenüber Fig. 1 geänderten Linsenelement, welches nunmehr rotationssymmetrisch ausgebildet ist,
- Fig. 7: die Leuchte der Fig. 6 in perspektivischer Explosionsdarstellung,
- Fig. 8: das Linsenelement der Leuchte der Fig. 7 in schematischer Draufsicht, etwa entlang Ansichtspfeil VIII in Fig. 7, und
- Fig. 9: einen Schnitt durch die Leuchte der Fig. 6 entlang einem Querschnitt durch das Linsenelement etwa entlang Schnittlinie IX-IX in Fig. 8.

Mehrere Ausführungsbeispiele erfindungsgemäßer Leuchten und erfindungsgemäßer Kollimatoroptiken, sowie erfindungsgemäßer Modulsysteme für Leuchten werden nachfolgend anhand der Ausführungsbeispiele der Zeichnungen detailliert beschrieben.

Der detaillierten Beschreibung sei voraus geschickt, dass gleiche oder miteinander vergleichbare Teile oder Elemente, auch soweit unterschiedliche Ausführungsbeispiele betroffen sind, mit gleichen Bezugszeichen, teilweise unter Hinzufügung kleiner Buchstaben, bezeichnet worden sind.

Des Weiteren sei angemerkt, dass technische Merkmale, die in nur einem Ausführungsbeispiel beschrieben sind, im Rahmen der Erfindung optional auch an anderen Ausführungsbeispielen vorgesehen sein können.

Schließlich sei angemerkt, dass technische Merkmale, die bei einem Ausführungsbeispiel nur optional beschrieben worden sind, bei anderen Ausführungsbeispielen auch optional weggelassen werden können.

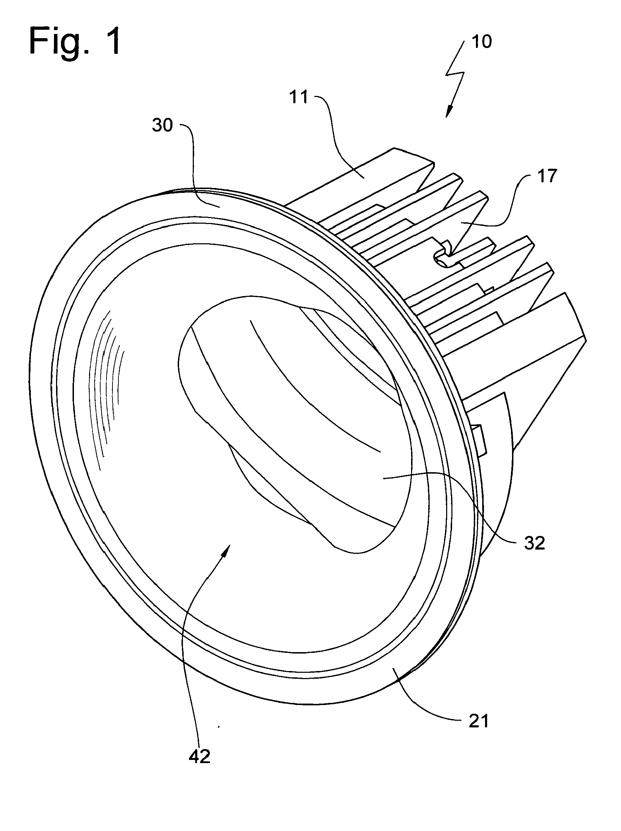

Ausweislich Fig. 1 ist ein erstes Ausführungsbeispiel einer erfindungsgemäßen Leuchte in einer perspektivischen Ansicht dargestellt.

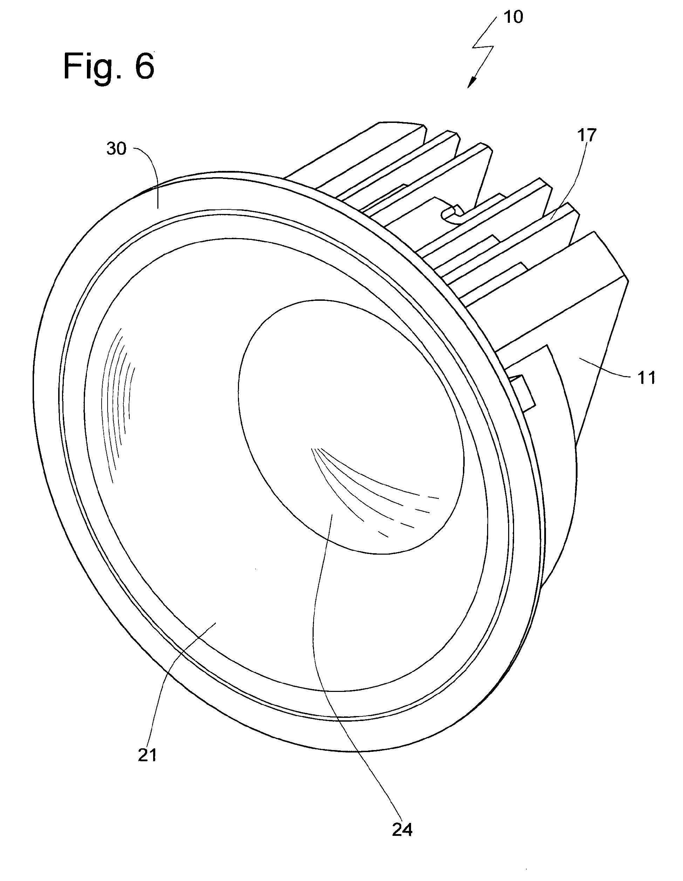

Die Leuchte der Fig. 1 und deren Darstellung entspricht der Leuchte der Fig. 6 und deren Darstellung, wobei die beiden unterschiedlichen Leuchten der Figuren 1 und 6 unterschiedliche Linsenelemente 24, 32 verwenden.

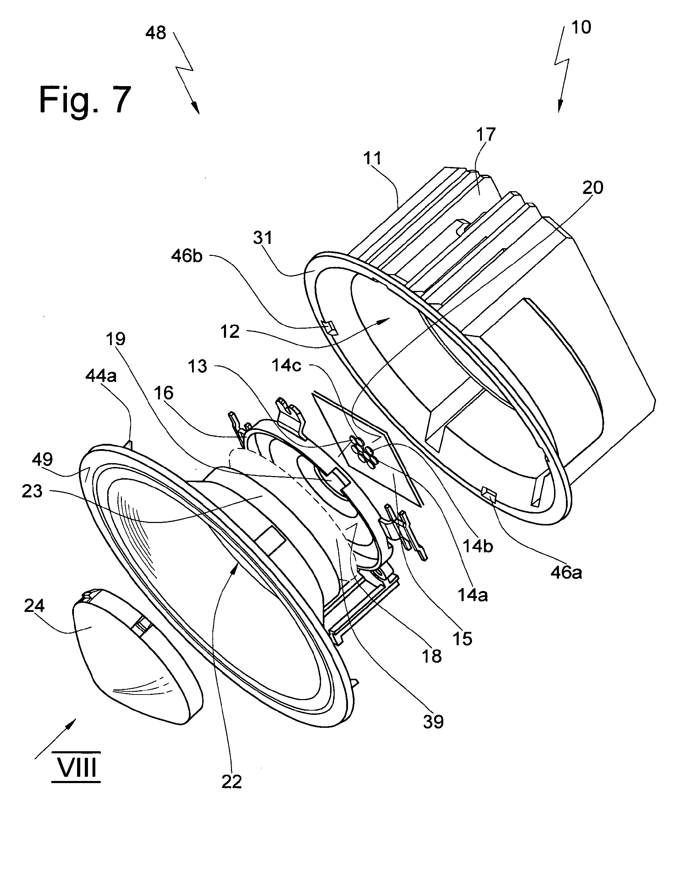

Anhand der Explosionsansicht der Fig. 7 einer Leuchte gemäß Fig. 6 soll zunächst der grundsätzliche Aufbau einer erfindungsgemäßen Leuchte 10 erläutert werden:
Ausweislich Fig. 7 umfasst die erfindungsgemäße Leuchte 10 ein Gehäuse 11 mit einer wannenförmigen Aufnahme 12. Das Gehäuse 11 besteht insbesondere aus Metall und weist Kühlrippen 17 auf, die die von den Lichtquellen 13 generierte Wärme an die Umgebungsluft abgeben können.

In die Aufnahme 12 wird eine Platine 15 montiert, auf der als Lichtquelle 13 ein Mehrzahl von LED's 14a, 14b, 14c auf einer Anordnungsfläche 20 angeordnet sind.

Als Anordnungsfläche wird die zur Montage oder Anbringung der LED's erforderliche Gesamtfläche bezeichnet, die die Hüllkonturen um sämtliche LED's umfasst.

Die Platine 15 wird - was in Fig. 7 nicht dargestellt ist - unmittelbar an den Boden des wannenförmigen Gehäuses 11 angeschraubt, oder auf geeignete anderer Weise daran befestigt.

Fig. 7 zeigt des Weiteren einen Einsatz 16, der eine zentrale Öffnung 19 aufweist. Der Einsatz 16 besteht aus Kunststoff und wird ebenfalls an dem Boden des wannenförmigen Gehäuses 11 angeschraubt. Die zentrale Öffnung 19 übergreift dabei die Anordnungsfläche 20 für die LED's 14a, 14b, 14c, 14d. Das Element 16 ist insoweit im Wesentlichen ringförmig ausgebildet.

Auf der der Platine 15 abgewandten Seite weist das Element 16 eine Reflektionsfläche 18 auf. Deren Funktion wird später noch detailliert erläutert.

In Fig. 7 ist des Weiteren eine Diffusorfolie 39 angedeutet. Diese weist eine nur geringe Wandstärke auf. Die Außenabmessungen der kreisscheibenförmigen Diffusorfolie entsprechen im Wesentlichen den Abmessungen der Lichteintrittsfläche des später noch beschriebenen Linsenelementes 24, 32.

Die Diffusorfolie 39 kann aus Kunststoff bestehen, und eine gewisse Oberflächenrauigkeit aufweisen, um das von den LED's emittierte Licht etwas weicher zu zeichnen, und für eine bessere Durchmischung zu sorgen.

Die Diffusorfolie 39 ist nicht zwingend bei den Ausführungsbeispielen der erfindungsgemäßen Leuchte vorgesehen, kann aber im Rahmen der Erfindung dort angeordnet werden.

Die erfindungsgemäße Leuchte 10 weist darüber hinaus ausweislich Fig. 7 ein im Wesentlichen ringförmig ausgebildetes Abdeckelement 21 auf. Dieses umfasst einen radial nach außen vorstehenden Kragen 30, der in montiertem Zustand auf dem Kragen 31 des Gehäuses 11 zum Liegen kommt.

Das vorzugsweise ebenfalls aus Kunststoff bestehende Abdeckelement 21 umfasst einen Axialabsatz 23, der eine zentrale Öffnung 22 umgibt.

In die Öffnung 22 kann ein Linsenelement 24 oder ein Linsenelement 32 eingesetzt werden.

Fig. 7 zeigt nur eines von mehren möglichen Linsenelementen 24. Dieses Linsenelement 24 ist bei dem Ausführungsbeispiel der Fig. 7 rotationssymmetrisch ausgebildet.

An dem Linsenelement 24 sind Befestigungselemente 45a, 45b in Form von klauenartigen Vorsprüngen ausgebildet.

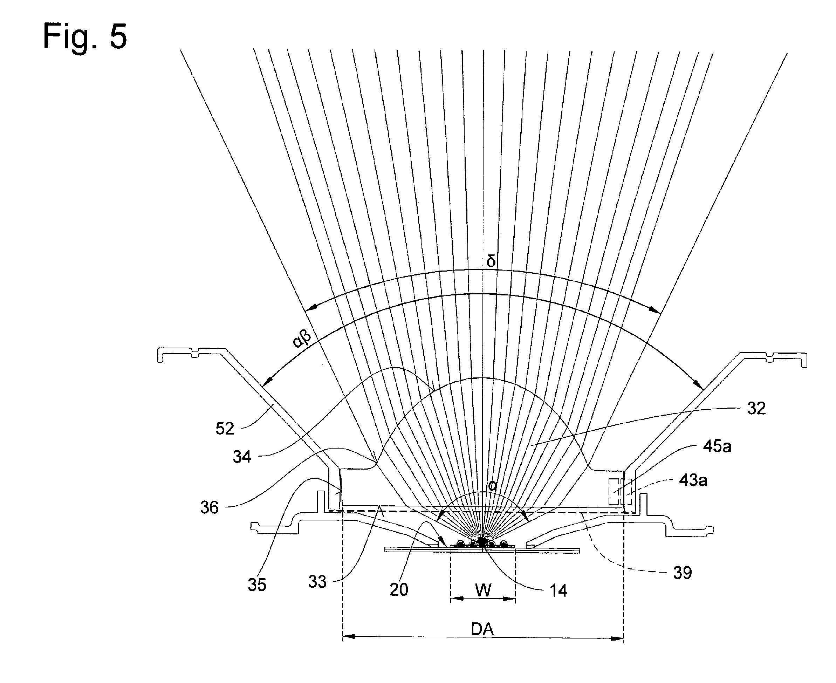

Der Axialabsatz 23 des Abdeckelementes 21 weist entsprechende, in Fig. 7 nicht dargestellte, und in Fig. 5 lediglich sehr schematisch angedeutete, Befestigungselemente 43a, auf, die z. B. als Federlaschen ausgebildet sind, und die mit den Klauen 45a an dem Linsenelement 24, 32 im Sinne einer Verriegelung der beiden Teile 24, 21 aneinander, zusammenwirken können.

Das Linsenelement 24, 32 kann also in das Abdeckelement 21 eingesetzt werden, und dort schnappend oder clipsend verriegelt werden.

Der ringförmige Körper 21 bildet mit dem darin eingesetzten Linsenelement 24, 32 somit eine Handhabungseinheit.

Diese Handhabungseinheit kann unter Zuhilfenahme von weiteren Befestigungselementen 44a, 44b, die entlang dem Umfang des Abdeckelementes 21 angeordnet sind, unmittelbar mit entsprechenden Gegenbefestigungselementen 46a, 46b am Gehäuse 11 in Eingriff gebracht werden. Die Gegenbefestigungselemente 46a, 46b können beispielsweise jeweils als Ausnehmung ausgebildet sein, in die die als Federlaschen ausgebildeten Befestigungsmittel 44a, 44b des Abdeckelementes 21 eingreifen.

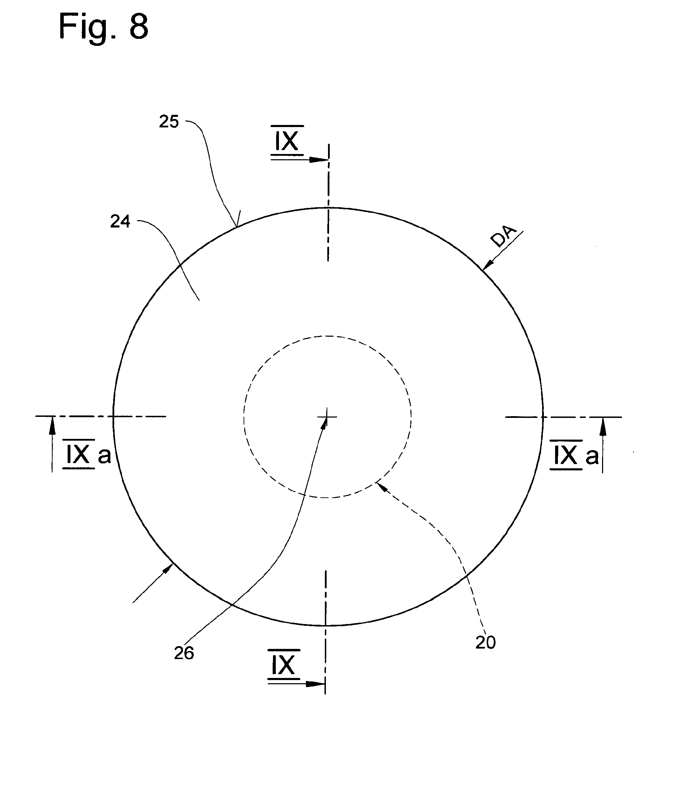

Im Folgenden soll zunächst anhand des Ausführungsbeispiels der Figuren 6 bis 9 das lichttechnische Prinzip dieses Downlights erläutert werden.

Die Leuchte 10 wird deckenseitig befestigt. Die Anbringung der Leuchte erfolgt insbesondere an einer Zwischendecke, derart, dass das Gehäuse 11 mit seinen Kühlrippen 17 durch eine kreisförmige Öffnung in der Zwischendecke hindurchgesteckt wird. Nicht dargestellte Federklemmelemente an dem Gehäusen spannen den Kragen 31 des Gehäuses 11 mit seiner Rückseite, also mit seiner in Fig. 7 nicht sichtbaren Seite, gegen die dem Inneren des Gehäuseraumes zugewandten Unterseite der Gipskartonplatte.

In montiertem Zustand ragt insoweit insbesondere der Kragen 30 des Abdeckelementes 21 aus der vorgesehenen Montageöffnung für die Leuchte heraus und ist sichtbar. Der Kragen 30 weist eine Ringstirnfläche 49 auf, die eine Ebene definiert. Die so definierte Ebene ist parallel zur Deckenfläche ausgerichtet.

Bei dem Ausführungsbeispiel der Figuren 6 bis 9 ist ein Linsenelement 24 vorgesehen, welches um seine Längsmittelachse 26 rotationssymmetrisch ausgebildet ist.

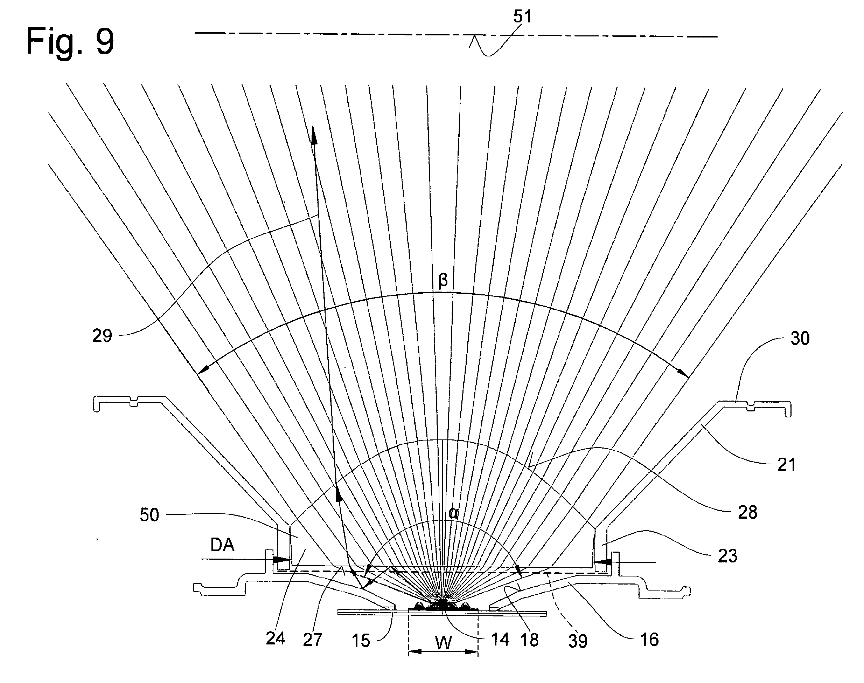

Ausweislich Fig. 9 ist ersichtlich, dass das Linsenelement 24 eine durchgehend plane Lichteintrittsfläche 27 und eine stetig gewölbte Lichtaustrittsfläche 28 aufweist. Im Querschnitt ist die Lichtaustrittsfläche 28 asphärisch gekrümmt und im Wesentlichen einer Parabel angenähert.

Das von den LED's, insbesondere von der LED 14 in Fig. 9 emittierte Licht weist einen Abstrahlwinkel α auf. Dieser kann beispielsweise bis zu 180° betragen.

Die Linse 24 ist als Sammellinse ausgebildet und reduziert den Abstrahlwinkel auf einen Winkel β.

Bei dem Ausführungsbeispiel der Fig. 9 beträgt der Winkel β etwa 75°.

Da das Linsenelement 24 insgesamt rotationssymmetrisch ausgebildet ist, wird insoweit ein Öffnungswinkel von 75° mit dieser Leuchte ermöglicht.

Bei anderen, nicht dargestellten Ausführungsbeispielen sind in Folge einer geänderten Krümmung der Grenzfläche 28 andere Abstrahlwinkel β erreichbar.

Man erkennt, dass das Linsenelement 24 einen Axialabschnitt 50 aufweist, der einen konstanten Querschnitt mit kreisförmiger Querschnittsfläche aufweist. Der Axialabschnitt 50 entspricht hinsichtlich seiner Höhe im Wesentlichen dem Axialabschnitt 23 des Abdeckelementes 21.

Die Anordnung eines Axialabschnittes 50 an dem Linsenselement 24 erlaubt die einfache Anbringung der Befestigungselemente 45a, 45b unmittelbar an dem Linsenelement 24. Diesbezüglich sei jetzt kursorisch verwiesen auf die Schnittdarstellung der Fig. 5 durch ein anderes Linsenelement 32. In der Darstellung der Fig. 5 sind die linsenelementseitigen Befestigungselemente 45a und das abdeckelementseitige Gegenbefestigungselement 43 a - lediglich beispielhaft - angedeutet.

Gleiche Befestigungselemente 45, 43 können natürlich auch bei dem Linsenelement 24 gemäß Fig. 9 vorgesehen sein.

Allen Ausführungsbeispielen ist gemeinsam, dass eine Vielzahl derartiger Befestigungselemente 45 entlang dem Umfang des Linsenelementes, vorzugsweise äquidistant voneinander angeordnet, vorgesehen sein können.

Das von den LED's 14 bzw. das von der Gruppe von LED's emittierte Licht trifft zunächst auf eine Diffusorfolie 39, die bei dem Ausführungsbeispiel der Fig. 9 optional vorgesehen sein kann. Hierdurch wird eine bessere Lichtdurchmischung erreicht.

Von besonderer Bedeutung ist, dass bei dem Ausführungsbeispiel der Fig. 9 optional ein Element 16 vorgesehen ist, welches eine Reflektionsfläche 18 aufweist. Die Reflektionsfläche 18 kann die Lichtanteile - wie durch den Lichtstrahl 29 veranschaulicht - die ausgehend von den LED's 14 zunächst an der Lichteintrittsfläche 27 des Linsenelementes 24 reflektiert werden, nochmalig auf das Linsenelement 24 zurückreflektieren, sodass auch die Lichtstrahlen 29 auf die in Fig. 9 lediglich schematisch angedeutete Bodenfläche 51 des Gebäuderaumes treffen können, und somit dazu beitragen können, die Bodenfläche 51 mit auszuleuchten. Die Effizienz der Leuchte ist durch die Reflektionsfläche 18 insoweit erhöht.

Ausweislich des Ausführungsbeispiels der Figuren 1 bis 5 wird nun eine weitere erfindungsgemäße Leuchte 10 beschrieben, bei der ein anderes Linsenelement 32 eingesetzt wird.

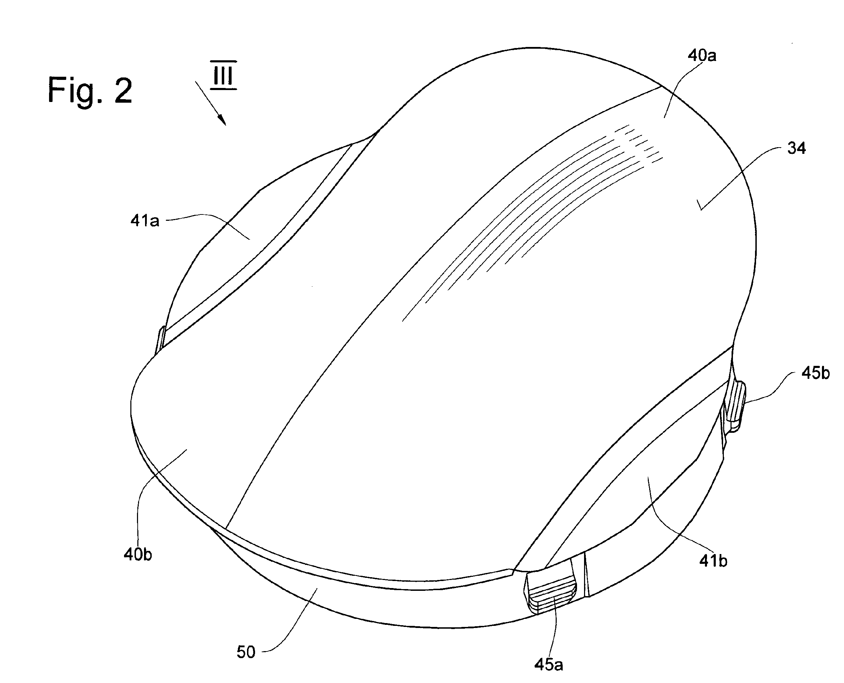

Dieses ist in Fig. 2 in Einzeldarstellung in perspektivischer Ansicht gezeigt.

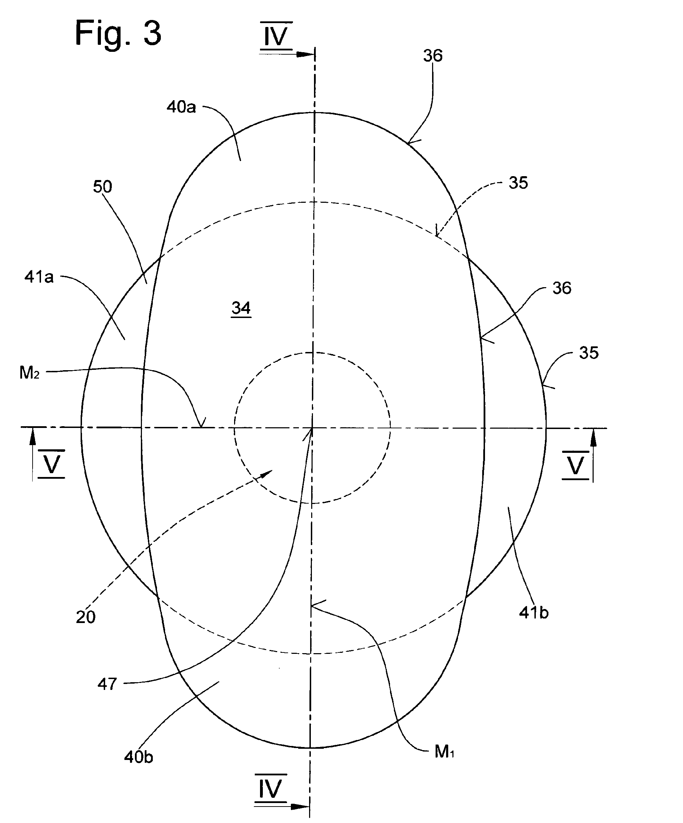

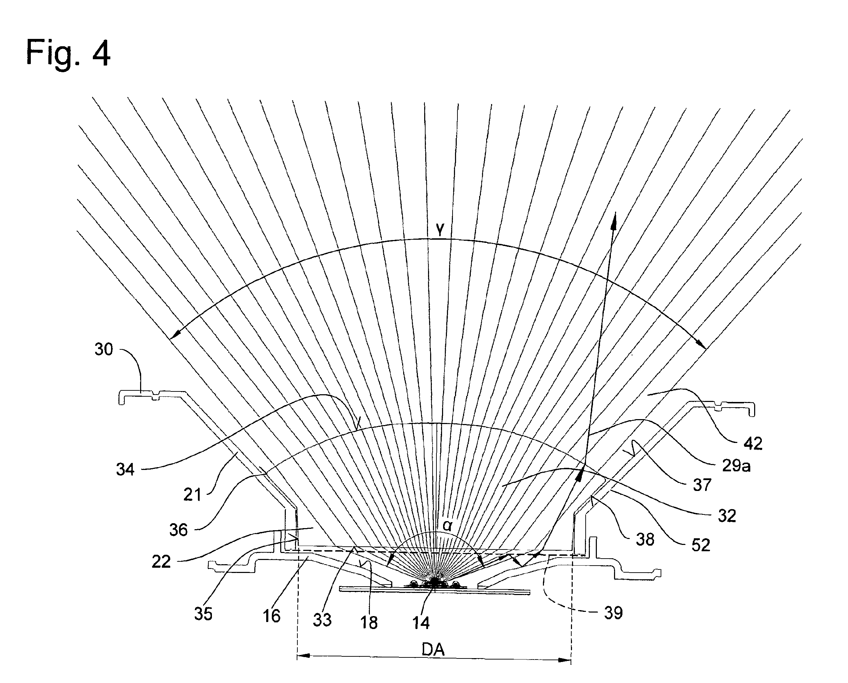

Man erkennt insbesondere bei Betrachtung der Fig. 3 und 4, dass ein identischer Axialabschnitt 50, wie bei dem Linsenelement 24, vorgesehen ist. Auch die Lichteintrittsfläche 33 des Linsenelementes 32 ist identisch ausgebildet wie bei dem zuvor beschriebenen Linsenelement 24. Die Lichteintrittsfläche 33 ist nämlich ebenfalls plan ausgebildet und weist eine kreisförmige Kontur auf.

Demgegenüber ist die Lichtaustrittsfläche 34 dieses Linsenelementes 32 anders ausgebildet.

Die Ansicht der Fig. 3 lässt erkennen, dass die Lichtaustrittsfläche 34 des Linsenelementes 32 Übertrittsbereiche 40a, 40b aufweist, in denen das Linsenelement 32 über die Umfangskontur 35 der Lichteintrittsfläche 33 hinausragt.

Zugleich zeigt das Linsenelement 32 sogenannte Einschnürungsbereiche 41 a, 41 b in denen die Lichtaustrittsfläche 34 in ihrer Kontur 36 gegenüber der Kontur 35 der Lichteintrittsfläche 33 zurückspringt.

Die zentrale Öffnung 22 des Abdeckelementes 21 ist kreisförmig ausgebildet, und entspricht von ihrer Größe her der Größe der Lichteintrittsfläche 33.

Die Übertrittsbereiche 40a, 40b erstrecken sich also auch über die Ränder der Öffnung 22 hinaus nach außen.

Anhand der Schnittdarstellungen der Figuren 4 und 5 wird folgendes deutlich:
Die Schnittdarstellung der Fig. 5 stellt einen Schnitt durch den Querschnitt dar.

Man erkennt eine stetig gewölbte, nahezu kreisförmige Grenzfläche 34 in Form der Lichtaustrittsfläche 34 des Linsenelementes 32.

Das von den LED's 14 unter einem Abstrahlwinkel α emittierte Lichtbündel wird sehr stark kollimiert, auf einen Winkelbereich δ.

Demgegenüber zeigt die Schnittdarstellung der Fig. 4, die einen Längsschnitt durch das Linsenelement 32 entlang der Schnittlinie IV-IV darstellt, dass in Folge der Grenzfläche 34 eine Bündelung des von den LED's 14 emittierten Lichtes auf einen Winkelbereich γ erfolgt.

Der Winkel γ ist größer als der Winkel δ.

Bei dem Ausführungsbeispiel beträgt der Lichtabstrahlwinkel δ etwa 50° und der Lichtabstrahlwinkel γ etwa 80°.

Bei weiteren, nicht dargestellten Ausführungsbeispielen können auch andere Winkelmaße Anwendung finden.

Bei besonders vorteilhaften weiteren, nicht dargestellten Ausführungsbeispielen ist der Winkel γ als der Winkel δ. Der Größenunterscheid kann insbesondere mehr als 20° betragen.

Beiden Ausführungsbeispielen von Linsenelementen 24, 32 ist gemein, dass das Abdeckelement 21 einen konischen Abschnitt 52 mit einem Öffnungswinkel αβ aufweist, der etwa 90° beträgt. Der Öffnungswinkel αβ ist insoweit größer als der Abstrahlwinkel des Linsenelementes. Diese Betrachtung gilt unabhängig von der Querschnittsebene.

Das Abdeckelement 21 hat insoweit überhaupt keine lichttechnische Funktion, sondern dient nun dazu, geringe Streulichtanteile abzublenden.

Der Lichtabstrahlwinkel wird ausschließlich von den Grenzflächen des Linsenelementes 24, 32 bestimmt. Zusätzliche lichtlenkende Elemente, insbesondere nach Art herkömmlicher Reflektoren, sind bei den erfindungsgemäßen Leuchten nicht vorgesehen.

Wie sich insbesondere aus den Figuren 4, 5 und 9 ergibt, weist die Lichteintrittsfläche 33, 27, einen Außendurchmesser DA auf, der erheblich größer ist als die Anordnungsfläche 20 für die LED's. So kann die maximale Breite der Anordnungsfläche beispielsweise im Bereich von 10 bis 30 mm liegen.

Der Außendurchmesser DA der Lichteintrittsfläche ist demgegenüber deutlich größer, und beträgt vorzugsweise mehr als 60 mm, beispielsweise etwa 100 mm.

Das Maß der Anordnungsfläche ist beispielhaft in Fig. 5 und in Fig. 9 mit W bezeichnet.

Die Lichteintrittsfläche 27, 33 überspannt die gesamte Anordnungsfläche 20 und übersteigt deren Abmessung W deutlich, insbesondere um ein Mehrfaches. Von der Erfindung sind insbesondere Leuchten umfasst, bei denen der Außendurchmesser der Lichteintrittsfläche das mehr als 1,5-fache der Abmessung W der Anordnungsfläche ausmacht.

Hierdurch wird erreicht, dass im Wesentlichen der gesamte Lichtstrom, der von den LED's emittiert wird, von dem Linsenelement 24, 32 eingesammelt werden kann.

Die Lichteintrittsfläche 33, 27 des Linsenelementes 24, 32 ist plan ausgebildet und weist keinerlei Höhlung oder dergleichen auf.

Demzufolge weist das Linsenelement 32, 24, welches im Rahmen dieser Patentanmeldung auch als Kollimatoroptik bezeichnet wird, keinerlei Totalreflektionsflächen auf, die bei Linsenelementen des Standes der Technik üblicherweise vorhanden sind.

Alternativ zu der optional in den Zeichnungen dargestellten Ausführungsbeispielen angedeuteten Diffusorfolie 39 kann auch die jeweilige Lichteintrittsfläche 27, 33 des Linsenelementes 24, 32 mit einer gewissen Aufrauhung versehen sein, um den gleichen gewünschten Effekt einer weichen Zeichnung des Lichtes und einer Lichtmischung zu erzielen.

Das Diffusorelement, bzw. alternativ die aufgeraute Lichteintrittsseite 27, 33 des Linsenelementes verhindert auch einen unmittelbaren Einblick auf die Lichtquelle 13.

Als Abstrahlwinkel bzw. als Winkelangabe einer Lichtverteilung im Sinne der vorliegenden Erfindung wird insbesondere derjenige Winkel bezeichnet, der im fachmännischen Sinne als Öffnungswinkel bezeichnet wird, und den "full width half max"-Wert darstellt. Es handelt sich also um denjenigen Wert des Lichtabstrahlwinkels, bei dem die Lichtintensität etwa auf die Hälfte der maximalen Lichtintensität gefallen ist.

## Patentansprüche

1. Leuchte (10) zur Anbringung an einer Decke eines Gebäuderaumes und zur Ausleuchtung einer Bodenfläche oder einer Gebäudeteilfläche, umfassend ein Gehäuse (11) mit einer wannenförmigen Aufnahme (12), in der als Lichtquelle (13) wenigstens eine LED (14a, 14b, 14c, 14d) angeordnet ist, die Licht auf ein Linsenelement (24, 32) abstrahlt, **dadurch gekennzeichnet, dass** das Linsenelement (24, 32) eine durchgehend plane Lichteintrittsfläche (27, 33) oder eine durchgehend geringfügig gewölbte Lichteintrittsfläche aufweist.

2. Leuchte nach Anspruch 1, **dadurch gekennzeichnet, dass** das Linsenelement (24, 32) eine gewölbte, insbesondere eine stetig gewölbte, Lichtaustrittsfläche (28, 34) aufweist.

3. Leuchte (10) zur Anbringung an einer Decke eines Gebäuderaumes und zur Ausleuchtung einer Bodenfläche oder einer Gebäudeteilfläche, insbesondere nach Anspruch 1 oder 2, umfassend ein Gehäuse (11) mit einer wannenförmigen Aufnahme (12), in der als Lichtquelle (13) wenigstens eine LED (14a, 14b, 14c, 14d) angeordnet ist, die Licht auf ein Linsenelement (24, 32) abstrahlt, **dadurch gekennzeichnet, dass** das Linsenelement eine Lichteintrittsfläche (27, 33) aufweist, deren Außendurchmesser (DA) größer ist als 40 mm, insbesondere größer ist als 50 mm, weiter insbesondere größer ist als 60 mm.

4. Leuchte nach Anspruch 3, **dadurch gekennzeichnet, dass** der Außendurchmesser (DA) der Lichteintrittsfläche (27, 33) größer ist als 70 mm, insbesondere, dass der Außendurchmesser der Lichteintrittsfläche größer ist als 80 mm, weiter insbesondere, dass der Außendurchmesser der Lichteintrittsfläche größer ist als 90 mm, und weiter insbesondere, dass der Außendurchmesser der Lichteintrittsfläche etwa 100 mm beträgt.

5. Leuchte (10) zur Anbringung an einer Decke eines Gebäuderaumes und zur Ausleuchtung einer Bodenfläche oder einer Gebäudeteilfläche, insbesondere nach einem der vorangegangenen Ansprüche, umfassend ein Gehäuse (11) mit einer wannenförmigen Aufnahme (12), in der als Lichtquelle (13) wenigstens eine LED (14a, 14b, 14c, 14d) angeordnet ist, die Licht auf ein Linsenelement (32) abstrahlt, **dadurch gekennzeichnet, dass** das Linsenelement eine ovale Lichtverteilung bereitstellt.

6. Leuchte nach einem der vorangegangenen Ansprüche, **dadurch gekennzeichnet, dass** die Lichtaustrittsfläche (34) des Linsenelementes (32) eine Umfangskontur (36) aufweist, die über eine Umfangskontur (35) der Lichteintrittsfläche (33) zumindest bereichsweise hinausragt.

7. Leuchte nach einem der vorangegangenen Ansprüche, **dadurch gekennzeichnet, dass** die Lichtaustrittsfläche (34) des Linsenelementes (32) eine Umfangskontur (36) aufweist, die Einschnürungsbereiche (41 a, 41 b) umfasst, entlang derer die Umfangskontur (35) der Lichteintrittsfläche (33) über die Umfangskontur (36) der Lichtaustrittsfläche (34) hinausragt.

8. Leuchte (10) zur Anbringung an einer Decke eines Gebäuderaumes und zur Ausleuchtung einer Bodenfläche oder einer Gebäudeteilfläche, insbesondere nach einem der vorangegangenen Ansprüche, umfassend ein Gehäuse (11) mit einer wannenförmigen Aufnahme (12), in der als Lichtquelle (13) wenigstens eine LED (14a, 14b, 14c, 14d) angeordnet ist, die Licht auf ein Linsenelement (24, 32) abstrahlt, **dadurch gekennzeichnet, dass** das Linsenelement eine Lichteintrittsfläche (27, 33) aufweist, die mit einer Aufrauhung versehen ist, oder der im Lichtweg ein Diffusorelement, insbesondere eine Diffusorfolie (39), vorgeschaltet ist.

9. Leuchte nach Anspruch 8, **dadurch gekennzeichnet, dass** das Diffusorelement, insbesondere die Diffusorfolie (39), als gesondertes Element mittelbar oder unmittelbar an dem Gehäuse (11) befestigbar ist.

10. Leuchte (10) zur Anbringung an einer Decke eines Gebäuderaumes und zur Ausleuchtung einer Bodenfläche oder einer Gebäudeteilfläche, insbesondere nach einem der vorangegangenen Ansprüche, umfassend ein Gehäuse (11) mit einer wannenförmigen Aufnahme (12), in der als Lichtquelle (13) wenigstens eine LED (14a, 14b, 14c, 14d) angeordnet ist, die Licht auf ein Linsenelement (24, 32) abstrahlt, **dadurch gekennzeichnet, dass** das Linsenelement eine Lichteintrittsfläche (27, 33) aufweist, die größer, insbesondere erheblich größer, ausgebildet ist als eine Anordnungsfläche (20) für die wenigstens eine LED (14a, 14b, 14c, 14d), entlang der die wenigstens eine LED angeordnet ist, wobei die Anordnungsfläche (20) für die wenigstens eine LED von einer ringförmigen, insbesondere kreisringförmigen Reflektionsfläche (18) umgeben ist, die Lichtanteile (29, 29a), die von der Lichteintrittsfläche (27, 33) des Linsenelementes reflektiert werden, auf das Linsenelement (24, 32) zurückwirft.

11. Leuchte (10) zur Anbringung an einer Decke eines Gebäuderaumes und zur Ausleuchtung einer Bodenfläche oder einer Gebäudeteilfläche, insbesondere nach einem der vorangegangenen Ansprüche, umfassend ein Gehäuse (11) mit einer wannenförmigen Aufnahme (12), in der als Lichtquelle (13) wenigstens eine LED (14a, 14b, 14c, 14d) angeordnet ist, die Licht auf ein Linsenelement (24, 32) abstrahlt, **dadurch gekennzeichnet, dass** ein im Wesentlichen ringförmiges Abdeckelement (21) an dem Gehäuse (11) festgelegt ist, das eine zentrale Öffnung (22) aufweist, deren Größe im wesentlichen der Größe der Lichteintrittsfläche (27, 33) des Linsenelementes (24, 32) entspricht.

12. Kollimatoroptik (24), insbesondere für eine Leuchte (10) nach einem der vorangegangenen Ansprüche 1 bis 11, wobei die Kollimatoroptik (24) entlang ihrer Mittellängsachse (26) rotationssymmetrisch ausgebildet ist, und eine plane Lichteintrittsfläche (27) und eine gewölbte Lichtaustrittsfläche (28) umfasst, die eine asphärische, im Querschnitt im Wesentlichen parabelförmige Kontur aufweist.

13. Kollimatoroptik (32), insbesondere für eine Leuchte (10) nach einem der vorangegangenen Ansprüche 1 bis 11, wobei die Kollimatoroptik (32) eine plane, im Wesentlichen kreisförmige Lichteintrittsfläche (33), und eine gewölbte Lichtaustrittsfläche (34) umfasst, mit einer Umfangskontur (36), die über die Kreiskontur (35) der Lichteintrittsfläche (33) zumindest abschnittsweise herausragt.

14. Kollimatoroptik (24), insbesondere für eine Leuchte (10) nach einem der vorangegangenen Ansprüche 1 bis 11, wobei die Kollimatoroptik eine plane, im Wesentlichen kreisförmige Lichteintrittsfläche (33), und eine gewölbte Lichtaustrittsfläche (34) umfasst, wobei die Kollimatoroptik (32) entlang einer ersten Mittellängsebene (M₁), die eine Mittellängsachse (47) der Kollimatoroptik (24) umfasst, spiegelsymmetrisch ausgebildet ist, und entlang einer zweiten Mittellängsebene (M₂), die die erste Mittellängsebene (M₁) entlang der Mittellängsachse (47) schneidet, ebenfalls spiegelsymmetrisch ausgebildet ist, wobei die Querschnitte entlang der beiden Mittellängsebenen (M₁, M₂) unterschiedlich ausgebildet sind.

15. Modulsystem (48) für Leuchten, insbesondere für eine Leuchte nach einem der vorangegangenen Ansprüche 1 bis 11, umfassend ein erstes Linsenelement (24), insbesondere eine Kollimatoroptik nach einem der vorangegangenen Ansprüche 12 bis 14, und ein zweites Linsenelement (32), insbesondere eine Kollimatoroptik nach einem der vorangegangenen Ansprüche 12 bis 14, wobei die beiden Linsenelemente (24, 32) eine gleich ausgebildete und gleich dimensionierte Lichteintrittsfläche (27, 33) und gleich ausgebildete und gleich dimensionierte Befestigungsmittel (45a, 45b) zur mittelbaren oder unmittelbaren Befestigung an einem Gehäuse (11) der Leuchte (10) aufweisen, wobei die beiden Linsenelemente (24, 32) zur Erzielung unterschiedlicher Lichtverteilungen unterschiedlich ausgebildete Lichtaustrittsflächen (28, 34) aufweisen.
